# EUROPEAN PATENT APPLICATION

(11) **EP 1 534 022 A1**
(43) Date of publication of application: **25.05.2005**
(21) Application number: 03292900.2
(22) Date of filing: 21.11.2003
(51) Int. Cl.: H04Q 7/22, H04Q 7/38, H04L 12/56

(54) **Method for supporting identification tag based services**

(71) Applicant: ALCATEL, 75008 Paris (FR)
(72) Inventor: Uwe, Stahl, Dipl.-Ing., 71229 Leonberg (DE); Orlamünder, Harald, Dipl.-Ing., 71254 Ditzingen (DE); Köstering, Nina, Dipl.-Ing. (BA), 70499 Stuttgart (DE); Engmann, Frank, Dipl.-Ing., 71032 Boeblingen (DE); Schmoll, Siegfried, Dipl.-Ing, 71282 Hemmingen (DE)
(74) Representative: LOUIS- PÖHLAU- LOHRENTZ

(57) **Abstract**

The invention concerns a method, a server (6) and a mobile phone (3) for supporting identification tag based services. An identification tag (5) is associated with a mobile phone (3). The identification tag (5) broadcasts an identification information via a short range radio interface. The identification information is transferred to the server (6). The server (6) accesses a database for retrieving a mobile phone telephone number associated with the received identification information. Then, it sends a message to the mobile phone (3) addressed by the retrieved mobile phone telephone number.

## Description

The present invention relates to a method for supporting identification tag based services, wherein an identification tag having a short range radio interface broadcasts an identification information via the short range radio interface. The present invention further relates to a server and a mobile phone for supporting identification tag based services.

Radio frequency identification tags are widely used for the identification of persons or goods. Further, those tags are increasingly used in the field of billing and access control, for example keyless go systems for automobiles.

For example, US 2002/0057754 A1 describes such type of identification tag that holds authentication and/or identification data. The identification tag interfaces with a computer system to provide user authentication information. The identification tag holds an encrypted authentication code. An interrogator is located remote to this identification tag. The identification tag communicates, in response to interrogation, the encrypted authentication code. The authentication system further includes a database of authorized users related to authentisation codes and a processor to compare the communicated data with the database records. Such, the communicated data is utilized to authenticate an authorized user of a product.

It is a drawback of such identification tag based authorization systems that a user using such tags does not have any access to the tag and is not informed about communication actions wherein the tag is involved. It is not possible for the user to influence communication actions or receive a feedback of the actions initiated by the identification tag.

It is the object of the present invention to improve identification tag based services.

The object of the present invention is achieved by a method for supporting identification tag based services comprising the steps of: associating an identification tag with a mobile phone; transferring an identification information broadcasted by the identification tag via short range radio interface to a server; accessing a database for retrieving a mobile phone telephone number associated with said identification information; and sending, by said server, a message to the mobile phone addressed by the retrieved mobile phone telephone number. The object of the present invention is further achieved by a server for supporting identification tag based services, wherein the server comprises a communication unit for receiving an identification information broadcasted by an identification tag via short range radio interface and transferred to the server, and a control unit adapted to access a database for retrieving a mobile phone telephone number associated with the identification information and to send a message to the mobile phone addressed by the retrieved mobile phone telephone number. The object of the present invention is further achieved by a mobile phone for communicating via mobile communication network, wherein the mobile phone comprises an identification tag having a short range radio interface and wherein said identification tag is adapted to broadcast an identification information via said short range radio interface to an identification tag reader, said identification information is an identification information associated with the mobile phone telephone number of the mobile phone in a database, which is accessible for a server for retrieving a mobile phone telephone number associated with said identification information and for sending a message to the mobile phone addressed by the retrieved mobile phone telephone number.

The invention upgrades all such identification tag based applications with one important missing feature, the human interface. It becomes possible for such identification tag based applications to inform the user when the user is identified, to submit information about the actions caused by this identification process e.g. valued charge, to give further information or open the possibility to influence the billing or identification process. Keeping in mind that today the mobile phone is part of daily life and user carry them nearly always with them, this device provides an ideal interface for the human interaction. By combining both technologies, RFID (= Radio Frequency Identification) and mobile phone, the RFID-technology is enhanced with a bi-directional user interface. The user gets information about RFID based identification and application processes. He can interact with the process via his personal mobile device providing a familiar man machine interface. Further, a wide variety of additional identification tag based services, for example in the field of e-commerce, billing, authentication etc., can be created due to this invention.

Further advantages are achieved by the embodiments indicated by the dependent claims.

According to a preferred embodiment of the invention, the IMEI or IMSI (IMEI = International Mobile Equipment Identity; IMSI = International Mobile Subscriber Identity) of the mobile phone is transferred as identification information to the server via the short range radio interface and the server accesses a database of a mobile communication system to retrieve the mobile phone telephone number of the mobile phone by means of these data. This approach enables a cheap and powerful implementation of the invention. It is no longer necessary to establish an individual database which assigns identification informations to mobile telephone numbers. Existing databases of mobile communication systems may be reused to provide the mobile telephone number retrieval functionality of the invention.

The user friendliness of identification tag based services is improved if the server establishes a bi-directional user interface between the mobile phone addressed by the retrieved mobile phone telephone number and the identification tag based service provided by the server. The communication between this service and the user associated with the mobile phone is not limited to the transmission of a pure message to the mobile phone, but enables the execution of complex interactions. Such powerful man machine interface increases the acceptance of identification tag based services and makes it for the user more convenient to take advantage of such services.

Preferably, a plurality of identification tag readers are connected with the server. The identification information broadcasted by the identification tag via the short range radio interface is forwarded by the respective one of these identification tag readers to the server. Further, the respective identification tag reader transfers attendant reader specific data, for example specifying the location of the respective identification tag reader. Those type of data, the identification information and the reader specific data are evaluated and analyzed by the server to provide the respective identification tag based service.

There are various possibilities to associate the identification tag with the mobile telephone. Preferably, the identification tag is arranged within the housing of the mobile phone. For example, the identification tag is part of a battery unit of the mobile phone or part of the SIM tag of the mobile phone (SIM = Subscriber Identity Module). Further advantages are achieved if the identification tag is an integrated part of the mobile phone, for example part of the electronic circuit of the mobile phone. This makes it possible to automatically configure the IMSI or IMEI of the mobile phone as identification information broadcasted by the identification tag via the short range radio interface.

These as well as other features and advantages of the invention will be better appreciated by reading the following detailed description of presently preferred examplary embodiments taken in conjunction with accompanying drawings of which:
- Fig. 1: is a block diagram showing a system which provides an identification tag based service and has a server and a mobile phone according to the invention.
- Fig. 2: shows a functional view of the server and the mobile phone of Fig. 1

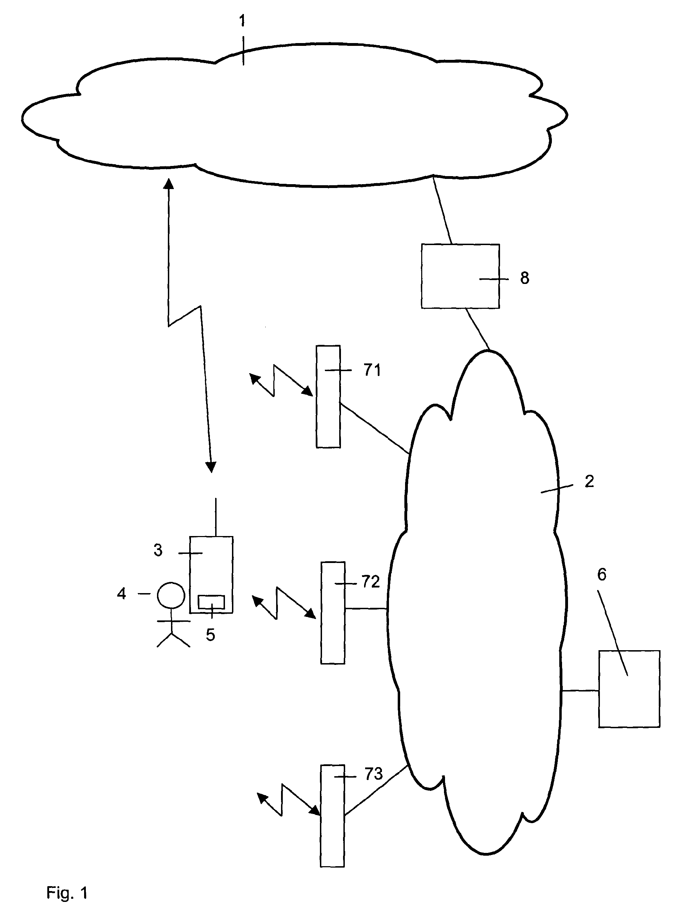

Fig. 1 shows two communication networks 1 and 2, a gateway 8, several identification tag readers 71, 72 and 73, a mobile phone 3, a user 4 and a server 6.

The communication network 1 is a mobile communication network, for example a cellular telephone network according to the GSM, UMTS or CDMA2000 standard (GSM = Global System for Mobile Communication; UMTS = Universal Mobile Telecommunications System). Further, it is possible that the communication network 1 is constituted by several communication networks, for example assigned to different network operators or based on different technologies.

The communication network 2 is a data network, for example an IP network (IP = Internet Protocol). Such IP network is constituted by a plurality of different physical networks, for example ATM or MPLS networks (ATM = Asynchrone Transfer Mode; MPLS = Multiprotocol Label Switching) interlinked via a common level 3 IP protocol. But, it is also possible that the communication network 2 is formed by a local data network, for example a LAN (= Local Area Network).

The communication network 2 is connected to the identification tag readers 71, 72 and 73, to the server 6 and to the gateway 8.

The gateway 8 enables the server 6 to exchange data with the mobile phone 3 via the communication network 1. For example, the gateway 8 provides an access interface to the SMS, WAP or GPRS service provided by the communication network 1 (SMS = Short Message Service; WAP = Wireless Access Protocol; GPRS = General Packet Radio Service).

The mobile phone 3 of the user 4 comprises an identification tag 5. The identification tag 5 has a short range radio interface and means for broadcasting an identification information via said short range radio interface. The identification tag readers 71, 72 and 73 have a transceiver for communicating with the identification tag 5 via this short range radio interface.

For example, the identification tag reader 72 comprises an antenna or coil and a transceiver and the identification tag 5 comprises a transponder program mod with unique information. The antenna emits radio signals to activate the identification tag 5 and read or optionally write data to the identification tag 5. The antenna emits radio waves depending upon the power output and the radio frequency used. When the identification tag 5 passes through the electromagnetic zone generated by the antenna it detects the activation signal of the antenna and responses by emitting radio waves. The transceiver decodes the information encoded in the radio signal received from the identification tag and forwards a received identification information via the communication network 2 to the server 6.

The frequency ranges of the electromagnetic field generated by the antenna may range in a low-frequency system at several frequency ranges < 135 KHz and in a high frequency system between 430 to 460 MHz, 865 to 928 MHz, 2,35 to 2,45 GHz, 5,4 to 6,8 GHz or at several frequency ranges between 2 to 27 GHz. Such system offering long read ranges and high reading speed.

Identification tags come in a wide variety of shapes and sizes. They can be categorized as either active or passive. Active tags are powered by an internal battery and have typically a read-write functionality, i. e. the data stored on the identification tag can be rewritten and/or modified. The active memory size of such identification tag may be for example 1 MB of memory. Passive identification tags operate without a separate external power source and obtain operation power from the electromagnetic field generated by the antenna.

Passive identification tags are consequently much lighter than active tags, less expensive and offer a virtually unlimited operation lifetime. Read-only tags are typically passive and are programmed with a unique set of data that cannot be modified. For example, the identification tag 5 is such a passive identification tag containing an identification information as unique set of data.

The outer shape of the identification tag readers 71, 72 and 73 come in a variety of shapes and sizes. For example, identification tag readers 71, 72 and 73 are built into doorways to receive identification informations from persons passing through the door.

For example, the system shown by Fig. 1 provides an identification tag based charging service for a public transportation system. The identification tag readers of the system are located at the entrance and departure gates of this public transportation system and scan the people entering and/or leaving the public transportation system.

When the user 4 having the mobile phone 3 with the identification tag 5 in his pocket enters this public transport system, he passes, for example, the identification tag reader 73. The identification tag reader 73 receives the radio signal broadcasted by the identification tag 5 when passing the electromagnetic field generated by the antenna of the identification tag reader 73. This radio signal includes the unique identification information of the identification tag 5. The identification tag reader 73 transfers this identification information to the server 6. When the user 4 leaves the public transportation system, for example, it passes the identification tag reader 72. The identification tag reader 72 receives the radio signal emitted by the identification tag 5 when passing the electromagnetic field generated by the antenna of the identification tag reader 72. It decodes the identification information of the identification tag 5 encoded in this radio signal. Then, it transfers the identification information via the communication network 2 to the server 6.

The server 6 calculates by means of the data received from the identification tag readers 72 and 73 and further data, for example time, location of tag readers, direction the user has passed, the identifier of the tag reader or the specific tariff of the user 4, the price for the transport service provided to the user 4. Then, it accesses a database for retrieving a mobile phone telephone number associated with the identification information received from the identification tag reader 72.

For example, it accesses a subscriber database of the communication system 1 or it accesses an proprietary database storing such data of enrolled users of the public transportation system.

Having retrieved the mobile phone telephone number, the server 6 sends a message to the mobile phone addressed by the retrieved mobile phone telephone number, for example, it sends a SMS message to the mobile phone 3 via the communication network 1. This message contains information about the price, the server 6 has calculated for the users usage of the public transportation system. The user 4 is now in a position to check whether this charging is correct and may further use this kind of information to keep overview on his cash disbursements.

A further example of an identification tag based service is the following scenario:
The identification tag readers 71 to 73 are located at doorways of a warehousing. When a customer of the warehousing having a mobile terminal with an identification tag passes one of the identification tag readers 71 to 73, the respective identification tag reader receives the identification information of the identification tag via the short range interface and forwards this information to the server 6. The server 6 detects by means of this information the presence of the respective customer and, optionally, the location of the customer and/or shop the customer is visiting. Then, it accesses a database for retrieving the mobile phone telephone number associated with the identification information and establishes a communication connection with the mobile phone addressed by the retrieved mobile phone telephone number. For example, it establishes a WAP connection or HTTP connection with a Midlet downloaded to the terminal 3. While this connection, it presents information about special offers and product information to the customer 4. Via his mobile phone 3, the customer 4 navigates through the information presented by the server 6.

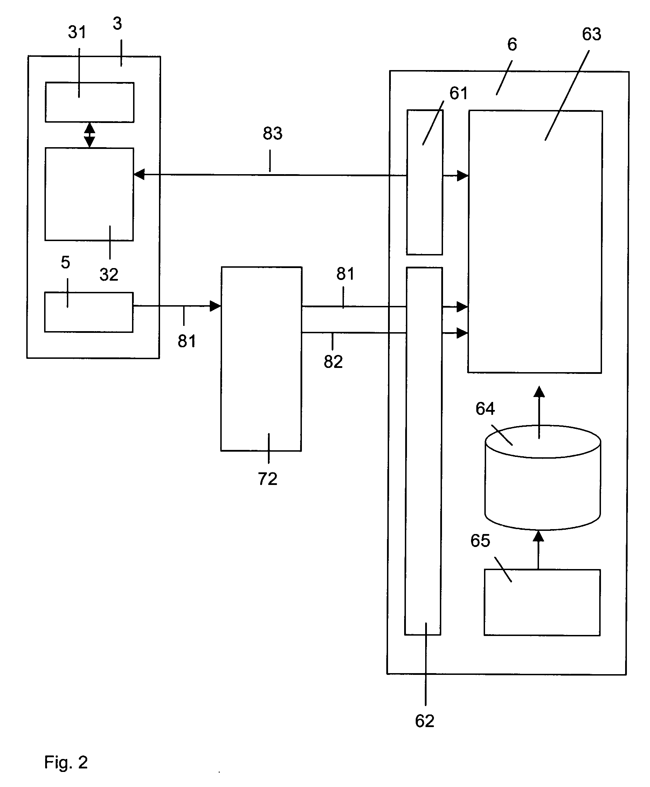

In the following, a detailed embodiment of the invention is described by help of Fig. 2.

Fig. 2 shows the mobile phone 3, the identification tag reader 72 and the server 6.

The mobile phone 3 comprises the identification tag 5, a control unit 32 and a display unit 31.

There exist various possibilities for the assembly of the mobile phone 3 and the identification tag 5. For example, the identification tag 5 is integrated in the mobile phone 3, the identification tag 5 is integrated in the battery carrying of the mobile phone 5 or the identification tag 5 is attached to the housing of the mobile terminal 3. For example, it is bound to the backside of the housing, at the inner surface of the housing or at the outer surface of the battery carrying unit of the mobile phone 3.

The control unit 32 is constituted by a Midlet executed by the mobile phone 3. This Midlet is adapted to exchange messages with the server 6 and provide a service specific user interface to the user 4. Beside these components, the mobile phone 3 comprises the usual components of a mobile phone, that means a transceiver for communicating via the communication network 1, various input and output means, a processor and a basic software package executed by this processor to provide the usual functionalities of a mobile phone.

The server 6 is composed of one or several interlinked computers, a hardware platform running on these computers and several application programs executed by the software platform formed by the aforementioned hard and software platform and controlling the funcitonalities of the server 6 when executed. From functional point of view, the server 6 comprises two communication units 61 and 62, two control units 63 and 65 and a memory unit 64.

The communication unit 62 provides the necessary functionalities for communicating via the communication network 2 with the identification tag readers 71, 72 and 73. For example, the communication unit 62 provides the necessary functions for handling the TCP/IP protocol stack (TCP = Transport Control Protocol; IP = Internet Protocol).

The communication unit 61 comprises the necessary functionalities for communicating with mobile phones via the communication network 1. It is possible that the communication unit 61 comprises the funcitonalities of the gateway 8, so it becomes possible for the server 6 to directly access communication services of the communication network 1.

The memory unit 64 comprises a data structure which assigns identification informations to mobile phone telephone numbers. For example, a block of data can be assigned to each identification information, wherein this block of data includes beside other data the associated mobile phone telephone number. Further data of the data block are, for example, an associated user indication, user profile or history data, e.g. specifying the place and the circumstances of the receipt of the associated identification information by one of the identification tag readers 71 to 73.

The control unit 65 is responsible for updating the assignment between mobile telephone number and identification information stored in the memory unit 64. For example, the control unit 65 provides a man machine interface for an operator of the service provided by the server 6.

But, it is also possible that the server 6 does not contain the memory unit 64 and the control unit 65. The control unit 63 may reuse already existing databases of the communication network 1 to retrieve information about the mobile phone telephone number associated with a specific identification information, as already described above.

When passing the identification tag reader 72, the identification tag 5 broadcasts a radio signal including an identification information 81. The identification tag reader 72 receives the signal, decodes the identification tag number and sends a message to the server 6. This message contains the identification information 81. In addition, this message can include attendant reader specific data, for example information about the location of the identification tag reader 72, an identifier assigned to the identification tag reader 72, the type and status of the identification tag reader 72, the local time of receipt, signal quality of the received radio signal, direction of movement of the identification tag and further sensor data, for example associated data of a video camera or microphone. Such attendant reader specific data 82 are transferred in addition to the identification data 81 to the control unit 63, to enable the provisioning of enhanced identification tag based services by the server 6.

The control unit 63 controls the provisioning of the specific identification tag based service, for example the services described by hand of Fig. 1. During service provisioning, the control unit 63 accesses the memory unit 64 and retrieves the mobile phone telephone number assigned to a received identification information. In the following, it uses this mobile phone telephone number to establish a communication connection 83 with the control unit 32 of the mobile phone 3.

## Claims

1. A method for supporting identification tag based services, wherein an identification tag (5) having a short range radio interface broadcasts an identification information (81) via the short range radio interface,
**characterized in**
**that** the method comprises the steps of:
associating the identification tag (5) with a mobile phone (3);
transferring the identification information (81) via said short range radio interface from the identification tag to a server (6);
accessing a data base (65) for retrieving a mobile phone telephone number associated with said identification information (81); and
sending, by that server (6), a message to the mobile phone (3) addressed by the retrieved mobile phone telephone number.

2. The method of claim 1,
**characterized in**
**that** the method comprises the further steps of:
transferring the IMEI of the mobile phone (3) as identification information (81) to the server (6) via the short range radio interface; and
accessing a IMEI database of a mobile communication system to retrieve the mobile phone telephone number of the mobile phone (3).

3. The method of claim 1,
**characterized in**
**that** the method comprises the further steps of:
transferring the IMSI of the mobile phone as identification information (81) to the server (6) via said short range radio interface; and
accessing a database of a mobile communication system to retrieve the mobile phone telephone number of the mobile phone (3).

4. The method of claim 1,
**characterized in**
**that** the server (6) establishes a bi-directional user interface between the mobile phone (3) and a service provided by the server (6).

5. The method of claim 1,
**characterized in**
**that** the method comprises the further steps of:
receiving, by one of a plurality of identification tag readers (71, 72, 73) connected with the server (6), the identification information (81) broadcasted by the identification tag (5) via the short range interface; forwarding the received identification information (81) to the server (6) via a communication network (2); and
transferring attendant reader specific data (82) to the server (6).

6. A server (6) for supporting identification tag based services,
**characterized in**
**that** the server (6) comprises a communication unit (62) for receiving an identification information (81) broadcasted by an identification tag (5) via a short range radio interface and transferred to the server (6), and a control unit (63) adapted to access a database (64) for retrieving a mobile phone telephone number associated with said identification information (81) and to send a message to the mobile phone addressed by the retrieved mobile phone telephone number.

7. A mobile phone (3) for communicating via a mobile communication network (1 ),
**characterized in**
**that** the mobile phone (3) comprises an identification tag (5) having a short range radio interface, and that said identification tag (5) is adapted to broadcast an identification information (81) via said short range radio interface to an identification tag reader (71, 72, 73), wherein said identification information (81) is an identification information associated with the mobile phone telephone number of the mobile phone in a data base (64) which is accessible for a server (6) for retrieving a mobile phone telephone number associated with said identification information (81) and for sending a message to the mobile phone (3) addressed by the retriever mobile phone telephone number.

8. The mobile phone of claim 7,
**characterized in**
**that** the identification tag (5) is arranged within the housing of the mobile phone (3).

9. The mobile phone of claim 7,
**characterized in**
**that** the identification tag is an integrated part of the mobile phone.

10. The mobile phone of claim 7,
**characterized in**
**that** the identification tag (5) is part of the battery unit of the mobile phone (3).
